# EUROPEAN PATENT APPLICATION

(11) **EP 4 780 001 A1**
(43) Date of publication of application: **22.07.2026**
(21) Application number: 23952337.6
(22) Date of filing: 12.09.2023
(51) Int. Cl.: H04N 21/443, H04N 5/63, H02M 1/00

(54) **IMAGE DISPLAY DEVICE**

(71) Applicant: LG Electronics Inc., Yeongdeungpo-gu Seoul 07336 (KR)
(72) Inventor: BAEK, Seunghun, Seoul 06772 (KR)
(74) Representative: Vossius & Partner Patentanwälte Rechtsanwälte mbB
(86) International application number: PCT/KR2023/013640
(87) International publication number: WO 2025/058097

(57) **Abstract**

The image display apparatus according to an embodiment of the present disclosure includes: a display; a signal processing device; and a power supply including a converter to supply a display driving voltage to the display, wherein the converter includes: a transformer; a first and second switching elements disposed at an input terminal of the transformer; a resonant capacitor and a resonant inductor disposed between and respectively connected to the input terminal of the transformer and the second switching element; and a switching controller to control the first and the second switching elements, wherein in response to a current flowing through the resonant inductor decreasing and a switching frequency of the first and second switching elements decreasing, the switching controller is configured to stop a switching operation of the first switching element and the second switching element. Accordingly, it is possible to reduce possibility of burnout of a circuit element.

## Description

### BACKGROUND

### 1. Technical Field

The present disclosure relates to an image display apparatus, and more particularly to an image display apparatus capable of reducing the possibility of burnout of a circuit element when an input voltage increases momentarily.

### 2. Description of the Related Art

An image display apparatus is an apparatus that displays images.

Recently, in keeping with the increase in image resolution and the increase in image sharpness, the display resolution or peak luminance of a display in an image display apparatus is increasing.

As the display resolution or peak luminance of a display becomes higher, the consumption of power supplied to the display increases.

Meanwhile, circuit elements in a power supply that supplies power to the display have a problem in that the possibility of burnout of the circuit elements increases due to a momentary increase in transient voltage and the like.

### SUMMARY

It is an objective of the present disclosure to provide an image display apparatus capable of reducing the possibility of burnout of a circuit element.

It is another objective of the present disclosure to provide an image display apparatus capable of reducing the possibility of burnout of a circuit element when an input voltage increases momentarily.

It is yet another objective of the present disclosure to provide an image display apparatus capable of reducing the possibility of burnout of a circuit element when load increases.

In order to achieve the above and other objectives, an image display apparatus according to an embodiment of the present disclosure includes: a display; a signal processing device configured to output an image signal to the display; and a power supply including a converter configured to supply a display driving voltage to the display, wherein the converter includes: a transformer; a first switching element and a second switching element disposed at an input terminal of the transformer and connected in series with each other; a resonant capacitor and a resonant inductor disposed between and respectively connected to the input terminal of the transformer and the second switching element; and a switching controller configured to control the first switching element and the second switching element, wherein in response to a current flowing through the resonant inductor decreasing and a switching frequency of the first switching element and the second switching element decreasing, the switching controller is configured to stop a switching operation of the first switching element and the second switching element.

Meanwhile, the converter can further include: a voltage detector configured to detect a voltage of the resonant capacitor; and a current detector configured to detect a current flowing through the resonant inductor, wherein the switching controller can be configured to calculate a switching frequency based on a voltage detected by the voltage detector, and in response to the current detected by the current detector decreasing and the calculated switching frequency decreasing, configured to stop a switching operation of the first switching element and the second switching element.

Meanwhile, in response to the switching frequency of the first switching element and the second switching element decreasing from a first frequency to a second frequency and a level of the current flowing through the resonant inductor decreasing from a first level to a second level, the switching controller can be configured to stop a switching operation of the first switching element and the second switching element.

Meanwhile, in response to the current flowing through the resonant inductor decreasing and an output voltage of the converter increasing, the switching controller can be configured to stop a switching operation of the first switching element and the second switching element.

Meanwhile, the converter can further include an output voltage detector configured to detect an output voltage of the converter, wherein in response to the current flowing through the resonant inductor decreasing and a voltage detected by the output voltage detector increasing, the switching controller can be configured to stop a switching operation of the first switching element and the second switching element.

Meanwhile, in response to the current flowing through the resonant inductor decreasing and the output voltage of the converter increasing from a first display driving voltage to a second display driving voltage, the switching controller can be configured to stop a switching operation of the first switching element and the second switching element.

Meanwhile, the signal processing device can be configured to: in response to a display power control-on mode being selected in a settings screen, control the power supply to supply the first display driving voltage to the display; and in response to a display power control-off mode being selected in the settings screen, control the power supply to supply the second display driving voltage to the display.

Meanwhile, in response to the current flowing through the resonant inductor decreasing and the display power control-on mode being switched to the display power control-off mode, the switching controller can be configured to stop a switching operation of the first switching element and the second switching element.

Meanwhile, in response to the current flowing through the resonant inductor decreasing and an image output mode being switched from Eco mode or Standard mode to Cinema mode or Game mode, the switching controller can be configured to stop a switching operation of the first switching element and the second switching element.

Meanwhile, in response to the current flowing through the resonant inductor falling outside a second allowable range and the switching frequency falling outside a first allowable range, the switching controller can be configured to stop a switching operation of the first switching element and the second switching element.

Meanwhile, in response to the current flowing through the resonant inductor decreasing, the switching frequency of the first switching element and the second switching element decreasing, and an input voltage input to the converter increasing, the switching controller can be configured to stop a switching operation of the first switching element and the second switching element.

Meanwhile, in response to the current flowing through the resonant inductor decreasing when a load at the output terminal of the converter increases, the switching controller can be configured to stop a switching operation of the first switching element and the second switching element.

Meanwhile, in response to the current flowing through the resonant inductor decreasing and the display displaying a black image and then a white image, the switching controller can be configured to stop a switching operation of the first switching element and the second switching element.

An image display apparatus according to another embodiment of the present disclosure includes: a display; a signal processing device configured to output an image signal to the display; and a power supply including a converter configured to supply a display driving voltage to the display, wherein the converter includes: a transformer; a first switching element and a second switching element disposed at an input terminal of the transformer and connected in series with each other; a resonant capacitor and a resonant inductor disposed between and respectively connected to the input terminal of the transformer and the second switching element; and a switching controller configured to control the first switching element and the second switching element, wherein in response to a current flowing through the resonant inductor decreasing and an output voltage of the converter increasing, the switching controller is configured to stop a switching operation of the first switching element and the second switching element.

Meanwhile, the converter can further include an output voltage detector configured to detect an output voltage of the converter, wherein in response to the current flowing through the resonant inductor decreasing and a voltage detected by the output voltage detector increasing, the switching controller can be configured to stop a switching operation of the first switching element and the second switching element.

### EFFECTS OF THE DISCLOSURE

An image display apparatus according to an embodiment of the present disclosure includes: a display; a signal processing device configured to output an image signal to the display; and a power supply including a converter configured to supply a display driving voltage to the display, wherein the converter includes: a transformer; a first switching element and a second switching element disposed at an input terminal of the transformer and connected in series with each other; a resonant capacitor and a resonant inductor disposed between and respectively connected to the input terminal of the transformer and the second switching element; and a switching controller configured to control the first switching element and the second switching element, wherein in response to a current flowing through the resonant inductor decreasing and a switching frequency of the first switching element and the second switching element decreasing, the switching controller is configured to stop a switching operation of the first switching element and the second switching element. Accordingly, it is possible to reduce possibility of burnout of a circuit element. Particularly, the possibility of burnout of the resonant capacitor can be reduced.

Meanwhile, the converter can further include: a voltage detector configured to detect a voltage of the resonant capacitor; and a current detector configured to detect a current flowing through the resonant inductor, wherein the switching controller can be configured to calculate a switching frequency based on a voltage detected by the voltage detector, and in response to the current detected by the current detector decreasing and the calculated switching frequency decreasing, configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the switching frequency of the first switching element and the second switching element decreasing from a first frequency to a second frequency and a level of the current flowing through the resonant inductor decreasing from a first level to a second level, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the current flowing through the resonant inductor decreasing and an output voltage of the converter increasing, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, the converter can further include an output voltage detector configured to detect an output voltage of the converter, wherein in response to the current flowing through the resonant inductor decreasing and a voltage detected by the output voltage detector increasing, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the current flowing through the resonant inductor decreasing and the output voltage of the converter increasing from a first display driving voltage to a second display driving voltage, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, the signal processing device can be configured to: in response to a display power control-on mode being selected in a settings screen, control the power supply to supply the first display driving voltage to the display; and in response to a display power control-off mode being selected in the settings screen, control the power supply to supply the second display driving voltage to the display. Accordingly, various display driving voltages can be output.

Meanwhile, in response to the current flowing through the resonant inductor decreasing and the display power control-on mode being switched to the display power control-off mode, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the current flowing through the resonant inductor decreasing and an image output mode being switched from Eco mode or Standard mode to Cinema mode or Game mode, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the current flowing through the resonant inductor falling outside a second allowable range and the switching frequency falling outside a first allowable range, the switching controller can be configured to stop a switching operation of the first switching element and the second switching element. Accordingly, it is possible to reduce possibility of burnout of a circuit element. Particularly, the possibility of burnout of the resonant capacitor can be reduced.

Meanwhile, in response to the current flowing through the resonant inductor decreasing, the switching frequency of the first switching element and the second switching element decreasing, and an input voltage input to the converter increasing, the switching controller can be configured to stop a switching operation of the first switching element and the second switching element. Accordingly, it is possible to reduce possibility of burnout of a circuit element. Particularly, the possibility of burnout of a circuit element can be reduced when the input voltage increases momentarily.

Meanwhile, in response to the current flowing through the resonant inductor decreasing when a load at the output terminal of the converter increases, the switching controller can be configured to stop a switching operation of the first switching element and the second switching element. Accordingly, it is possible to reduce possibility of burnout of a circuit element. Particularly, the possibility of burnout of a circuit element can be reduced when load increases.

Meanwhile, in response to the current flowing through the resonant inductor decreasing and the display displaying a black image and then a white image, the switching controller can be configured to stop a switching operation of the first switching element and the second switching element. Accordingly, it is possible to reduce possibility of burnout of a circuit element. Particularly, the possibility of burnout of the resonant capacitor can be reduced.

An image display apparatus according to another embodiment of the present disclosure includes: a display; a signal processing device configured to output an image signal to the display; and a power supply including a converter configured to supply a display driving voltage to the display, wherein the converter includes: a transformer; a first switching element and a second switching element disposed at an input terminal of the transformer and connected in series with each other; a resonant capacitor and a resonant inductor disposed between and respectively connected to the input terminal of the transformer and the second switching element; and a switching controller configured to control the first switching element and the second switching element, wherein in response to a current flowing through the resonant inductor decreasing and an output voltage of the converter increasing, the switching controller is configured to stop a switching operation of the first switching element and the second switching element. Accordingly, it is possible to reduce possibility of burnout of a circuit element. Particularly, the possibility of burnout of the resonant capacitor can be reduced.

Meanwhile, the converter can further include an output voltage detector configured to detect an output voltage of the converter, wherein in response to the current flowing through the resonant inductor decreasing and a voltage detected by the output voltage detector increasing, the switching controller can be configured to stop a switching operation of the first switching element and the second switching element. Accordingly, it is possible to reduce possibility of burnout of a circuit element. Particularly, the possibility of burnout of the resonant capacitor can be reduced.

### BRIEF DESCRIPTION OF THE DRAWINGS

FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4B is an internal block diagram of the remote controller of FIG. 2;
FIG. 5 is an exemplary internal block diagram of a display of FIG. 2;
FIGS. 6A and 6B are diagrams referred to in the description of an organic light-emitting panel of FIG. 5;
FIG. 7 is an exemplary internal block diagram of an image display apparatus according to an embodiment of the present disclosure;
FIG. 8 is an exemplary circuit diagram of a power supply according to an embodiment of the present disclosure;
FIGS. 9A to 9D are diagrams referred to in the description of FIG. 8;
FIG. 10 is a flowchart illustrating a method of operating an image display apparatus according to an embodiment of the present disclosure;
FIGS. 11A to 11C are diagram referred to in the description of FIG. 10; and
FIG. 12 is a flowchart illustrating a method of operating an image display apparatus according to another embodiment of the present disclosure.

### DETAILED DESCRIPTION OF THE PREFERRED EMBODIMENTS

Hereinafter, the present disclosure will be described in detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" can be used interchangeably.

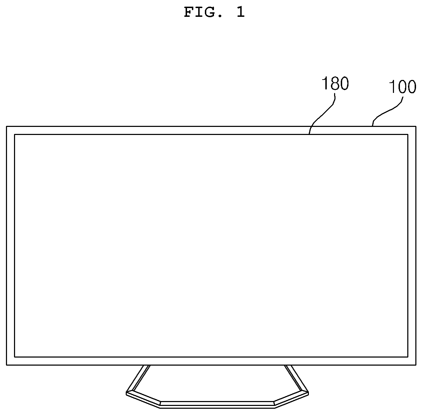

FIG. 1 is a diagram showing an image display apparatus according to an embodiment of the present disclosure.

Referring to the figure, an image display apparatus 100 can include a display 180.

Meanwhile, the display 180 can be implemented by one of various panels. For example, the display 180 can be one of a liquid crystal display panel (LCD panel), an organic light-emitting panel (OLED panel), and an inorganic light-emitting panel (LED panel).

The liquid crystal display panel can require a backlight in addition to a panel for image display.

On the other hand, the organic light-emitting panel or the inorganic light-emitting panel requires no backlight for image display.

The display resolution of the display 180 is getting higher and higher from 2K to 4K to 8K to 16K, etc., and the peak luminance of the display 180 is also increasing. Accordingly, the consumption of power supplied to the display 180 becomes higher.

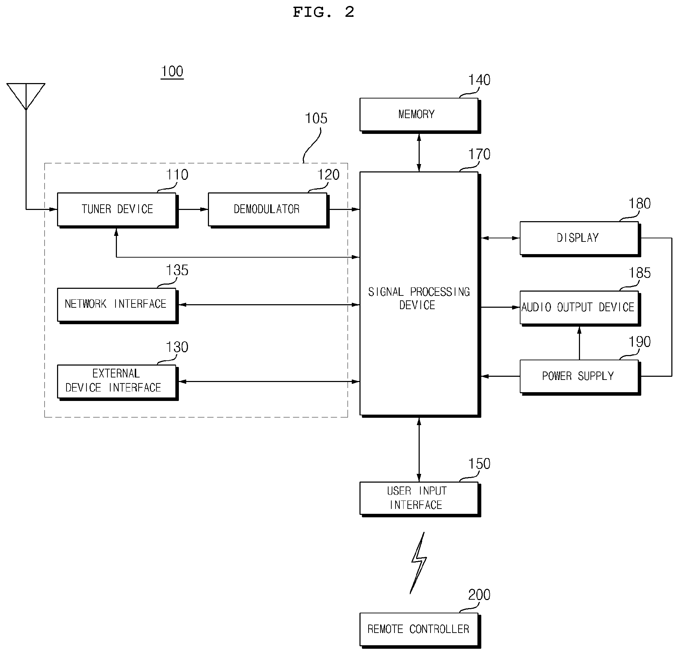

Meanwhile, circuit elements in a power supply 190 (see FIG. 2) that supplies power to the display 180 have a problem in that the possibility of burnout of the circuit elements increases due to a momentary increase in transient voltage and the like.

Accordingly, the present disclosure proposes a method of reducing the possibility of burnout of a circuit element.

The image display apparatus 100 according to an embodiment of the present disclosure provides a method of reducing heat generated from a circuit board in the image display apparatus 100 or reducing the possibility of burnout of circuit elements, by properly supplying a display driving voltage in various modes available for the display 180.

To this end, the image display apparatus according to an embodiment of the present disclosure includes a display 180, a signal processing device 170 (see FIG. 2) configured to output an image signal to the display 180, and a power supply 190 (see FIG. 2) configured to supply a display driving voltage to the display 180.

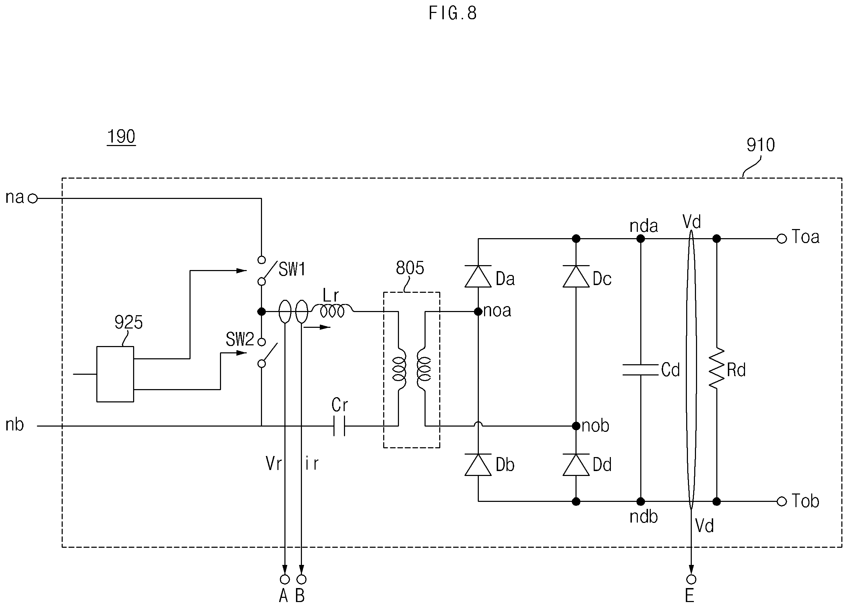

Meanwhile, a power supply 190 according to an embodiment of the present disclosure includes: a transformer 805 (see FIG. 8); a first switching element SW1 (see FIG. 8) and a second switching element SW2 (see FIG. 8) disposed at an input terminal of the transformer 805 and connected in series with each other; a resonant capacitor Cr (see FIG. 8) and a resonant inductor Lr (see FIG. 8) disposed between and respectively connected to the input terminal of the transformer 805 and the second switching element SW2; and a switching controller 925 (see FIG. 8) configured to control the first switching element SW1 and the second switching element SW2.

Meanwhile, if a current ir (see FIG. 8) flowing through the resonant inductor Lr decreases when a switching frequency of the first switching element SW1 and the second switching element SW2 decreases, the switching controller 925 according to an embodiment of the present disclosure is configured to control the first switching element SW1 and the second switching element SW2 to stop a switching operation.

Accordingly, it is possible to reduce possibility of burnout of a circuit element. Particularly, the possibility of burnout of the resonant capacitor can be reduced.

Meanwhile, if the current ir flowing through the resonant inductor Lr decreases when an output voltage Vd of the converter 910 increases, the switching controller 925 according to another embodiment of the present disclosure is configured to control the first switching element SW1 and the second switching element SW2 to stop a switching operation. Accordingly, it is possible to reduce possibility of burnout of a circuit element. Particularly, the possibility of burnout of the resonant capacitor can be reduced.

Meanwhile, if the current ir flowing through the resonant inductor Lr decreases when the switching frequency of the first switching element SW1 and the second switching element SW2 decreases as an input voltage input to the converter 910 increases, the switching controller 925 according to yet another embodiment of the present disclosure is configured to control the first switching element SW1 and the second switching element SW2 to stop a switching operation. Accordingly, it is possible to reduce possibility of burnout of a circuit element. Particularly, the possibility of burnout of a circuit element can be reduced when the input voltage increases momentarily.

Meanwhile, if the current ir flowing through the resonant inductor Lr decreases when a load at the output terminal of the converter 910 increases, the switching controller 925 according to yet another embodiment of the present disclosure is configured to control the first switching element SW1 and the second switching element SW2 to stop a switching operation. Accordingly, it is possible to reduce possibility of burnout of a circuit element. Particularly, the possibility of burnout of a circuit element can be reduced when load increases.

Meanwhile, the image display apparatus 100 of FIG. 1 can be a TV, a monitor, a tablet PC, a mobile terminal, and the like.

FIG. 2 is an example of an internal block diagram of the image display apparatus of FIG. 1.

Referring to FIG. 2, the image display apparatus 100 according to an embodiment of the present disclosure includes an image receiver 105, an external apparatus interface 130, a memory 140, a user input interface 150, a sensor device (not shown), a signal processing device 170, a display 180, and an audio output device 185.

The image receiver 105 can include a tuner 110, a demodulator 120, a network interface 135, and an external apparatus interface 130.

Meanwhile, unlike the figure, the image receiver 105 can include only the tuner 110, the demodulator 120, and the external apparatus interface 130. That is, the network interface 135 can not be included.

The tuner 110 selects an RF broadcast signal corresponding to a channel selected by a user or all prestored channels among radio frequency (RF) broadcast signals received through an antenna (not shown). In addition, the selected RF broadcast signal is converted into an intermediate frequency signal, a baseband image, or an audio signal.

For example, if the selected RF broadcast signal is a digital broadcast signal, the tuner 110 converts the digital broadcast signal into a digital IF (DIF) signal and, if the selected RF broadcast signal is an analog broadcast signal, the tuner 110 converts the analog broadcast signal into an analog baseband image or voice (CVBS/SIF) signal. That is, the tuner 110 can process a digital broadcast signal or an analog broadcast signal. The analog baseband image or voice (CVBS/SIF) signal output from the tuner 110 can be directly input to the signal processing device 170.

Meanwhile, the tuner 110 can include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 can perform demodulation and channel decoding and then output a stream signal TS. At this time, the stream signal can be a multiplexed signal of an image signal, an audio signal, or a data signal.

The stream signal output from the demodulator 120 can be input to the signal processing device 170. The signal processing device 170 performs demultiplexing, image/audio signal processing, and the like, and then outputs an image to the display 180 and outputs audio to the audio output device 185.

The external apparatus interface 130 can transmit or receive data with a connected external apparatus (not shown), e.g., a set-top box 50. To this end, the external apparatus interface 130 can include an A/V input and output device (not shown).

The external apparatus interface 130 can be connected in wired or wirelessly to an external apparatus, such as a digital versatile disk (DVD), a Blu ray, a game equipment, a camera, a camcorder, a computer (note book), and a set-top box, and can perform an input/output operation with an external apparatus.

The A/V input and output device can receive image and audio signals from an external apparatus. Meanwhile, a wireless transceiver (not shown) can perform short-range wireless communication with other electronic apparatus.

Through the wireless transceiver (not shown), the external apparatus interface 130 can exchange data with an adjacent mobile terminal 600. In particular, in a mirroring mode, the external apparatus interface 130 can receive device information, executed application information, application image, and the like from the mobile terminal 600.

The network interface 135 provides an interface for connecting the image display apparatus 100 to a wired/wireless network including the Internet network. For example, the network interface 135 can receive, via the network, content or data provided by the Internet, a content provider, or a network operator.

Meanwhile, the network interface 135 can include a wireless transceiver (not shown).

The memory 140 can store a program for each signal processing and control in the signal processing device 170, and can store signal-processed image, audio, or data signal.

In addition, the memory 140 can serve to temporarily store image, audio, or data signal input to the external apparatus interface 130. In addition, the memory 140 can store information on a certain broadcast channel through a channel memory function, such as a channel map.

Although FIG. 2 illustrates that the memory is provided separately from the signal processing device 170, the scope of the present disclosure is not limited thereto. The memory 140 can be included in the signal processing device 170.

The user input interface 150 transmits a signal input by the user to the signal processing device 170 or transmits a signal from the signal processing device 170 to the user.

For example, it can transmit/receive a user input signal, such as power on/off, channel selection, screen setting, etc., from a remote controller 200, can transfer a user input signal input from a local key (not shown), such as a power key, a channel key, a volume key, a set value, etc., to the signal processing device 170, can transfer a user input signal input from a sensor device (not shown) that senses a user's gesture to the signal processing device 170, or can transmit a signal from the signal processing device 170 to the sensor device (not shown).

The signal processing device 170 can demultiplex the input stream through the tuner 110, the demodulator 120, the network interface 135, or the external apparatus interface 130, or process the demultiplexed signals to generate and output a signal for image or audio output.

For example, the signal processing device 170 receives a broadcast signal received by the image receiver 105 or an HDMI signal, and perform signal processing based on the received broadcast signal or the HDMI signal to thereby output a processed image signal.

The image signal processed by the signal processing device 170 is input to the display 180, and can be displayed as an image corresponding to the image signal. In addition, the image signal processed by the signal processing device 170 can be input to the external output apparatus through the external apparatus interface 130.

The audio signal processed by the signal processing device 170 can be output to the audio output device 185 as an audio signal. In addition, audio signal processed by the signal processing device 170 can be input to the external output apparatus through the external apparatus interface 130.

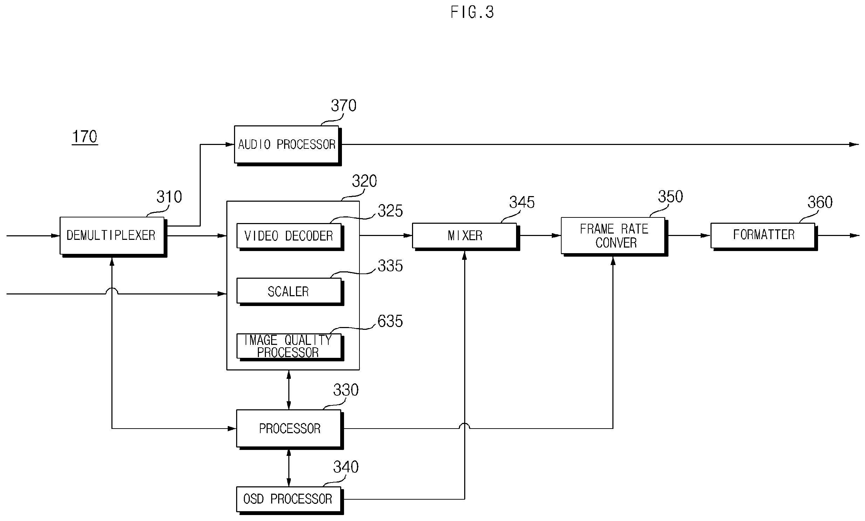

Although not shown in FIG. 2, the signal processing device 170 can include a demultiplexer, an image processor, and the like. That is, the signal processing device 170 can perform a variety of signal processing and thus it can be implemented in the form of a system on chip (SOC). This will be described later with reference to FIG. 3.

In addition, the signal processing device 170 can control the overall operation of the image display apparatus 100. For example, the signal processing device 170 can control the tuner 110 to control the tuning of the RF broadcast corresponding to the channel selected by the user or the previously stored channel.

In addition, the signal processing device 170 can control the image display apparatus 100 according to a user command input through the user input interface 150 or an internal program.

Meanwhile, the signal processing device 170 can control the display 180 to display an image. At this time, the image displayed on the display 180 can be a still image or a moving image, and can be a 2D image or a 3D image.

Meanwhile, the signal processing device 170 can display a certain object in an image displayed on the display 180. For example, the object can be at least one of a connected web screen (newspaper, magazine, etc.), an electronic program guide (EPG), various menus, a widget, an icon, a still image, a moving image, and a text.

Meanwhile, the signal processing device 170 can recognize the position of the user based on the image photographed by a photographing device (not shown). For example, the distance (z-axis coordinate) between a user and the image display apparatus 100 can be determined. In addition, the x-axis coordinate and the y-axis coordinate in the display 180 corresponding to a user position can be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 can be configured as a touch screen and used as an input device in addition to an output device.

The audio output device 185 receives a signal processed by the signal processing device 170 and outputs it as an audio.

The photographing device (not shown) photographs a user. The photographing device (not shown) can be implemented by a single camera, but the present disclosure is not limited thereto and can be implemented by a plurality of cameras. Image information photographed by the photographing device (not shown) can be input to the signal processing device 170.

The signal processing device 170 can sense a gesture of the user based on each of the images photographed by the photographing device (not shown), the signals detected from the sensor device (not shown), or a combination thereof.

The power supply 190 supplies corresponding power to the image display apparatus 100. Particularly, the power can be supplied to a signal processing device 170 which can be implemented in the form of a system on chip (SOC), a display 180 for displaying an image, and an audio output device 185 for outputting an audio.

Specifically, the power supply 190 can include a converter to convert an AC power into a DC voltage, and a THIRD converter to convert the level of the DC voltage.

The remote controller 200 transmits the user input to the user input interface 150. To this end, the remote controller 200 can use Bluetooth, a radio frequency (RF) communication, an infrared (IR) communication, an Ultra Wideband (UWB), ZigBee, or the like. In addition, the remote controller 200 can receive the image, audio, or data signal output from the user input interface 150, and display it on the remote controller 200 or output it as an audio.

Meanwhile, the image display apparatus 100 can be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram can be integrated, added, or omitted according to a specification of the image display apparatus 100 actually implemented. That is, two or more components can be combined into a single component as needed, or a single component can be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure can include a demultiplexer 310, an image processor 320, a processor 330, and an audio processor 370. In addition, the signal processing device 170 can further include and a data processor (not shown).

The demultiplexer 310 demultiplexes the input stream. For example, when an MPEG-2 TS is input, it can be demultiplexed into image, audio, and data signal, respectively. Here, the stream signal input to the demultiplexer 310 can be a stream signal output from the tuner 110, the demodulator 120, or the external apparatus interface 130.

The image processor 320 can perform signal processing on an input image. For example, the image processor 320 can perform image processing on an image signal demultiplexed by the demultiplexer 310.

To this end, the image processor 320 can include an image decoder 325, a scaler 335, an image quality processor 635, an image encoder (not shown), an OSD processor 340, a frame rate converter 350, a formatter 360, etc.

The image decoder 325 decodes a demultiplexed image signal, and the scaler 335 performs scaling so that the resolution of the decoded image signal can be output from the display 180.

The image decoder 325 can include a decoder of various standards. For example, a 3D image decoder for MPEG-2, H.264 decoder, a color image, and a depth image, and a decoder for a multiple view image can be provided.

The scaler 335 can scale an input image signal decoded by the image decoder 325 or the like.

For example, if the size or resolution of an input image signal is small, the scaler 335 can upscale the input image signal, and, if the size or resolution of the input image signal is great, the scaler 335 can downscale the input image signal.

The image quality processor 635 can perform image quality processing on an input image signal decoded by the image decoder 325 or the like.

For example, the image quality processor 635 can perform noise reduction processing on an input image signal, extend a resolution of high gray level of the input image signal, perform image resolution enhancement, perform high dynamic range (HDR)-based signal processing, change a frame rate, perform image quality processing suitable for properties of a panel, especially an OLED panel, etc.

The OSD processor 340 generates an OSD signal according to a user input or by itself. For example, based on a user input signal, the OSD processor 340 can generate a signal for displaying various information as a graphic or a text on the screen of the display 180. The generated OSD signal can include various data, such as a user interface screen of the image display apparatus 100, various menu screens, a widget, and an icon. In addition, the generated OSD signal can include a 2D object or a 3D object.

In addition, the OSD processor 340 can generate a pointer that can be displayed on the display, based on a pointing signal input from the remote controller 200. In particular, such a pointer can be generated by a pointing signal processing device, and the OSD processor 340 can include such a pointing signal processing device (not shown). Obviously, the pointing signal processing device (not shown) can be provided separately from the OSD processor 340.

The frame rate converter (FRC) 350 can convert a frame rate of an input image. Meanwhile, the frame rate converter 350 can output the input image without converting the frame rate.

Meanwhile, the formatter 360 can change a format of an input image signal into a format suitable for displaying the image signal on a display and output the image signal in the changed format.

In particular, the formatter 360 can change a format of an image signal to correspond to a display panel.

Further, the formatter 360 can convert the format of an image signal. For example, the formatter 360 can convert the format of a 3D image signal into one of various 3D formats, including a side-by-side format, a top/down format, a frame sequential format, an interlaced format, a checker box format, etc.

The processor 330 can control overall operations of the image display apparatus 100 or the signal processing device 170.

For example, the processor 330 can control the tuner 110 to control the tuning of an RF broadcast corresponding to a channel selected by a user or a previously stored channel.

In addition, the processor 330 can control the image display apparatus 100 according to a user command input through the user input interface 150 or an internal program.

In addition, the processor 330 can transmit data to the network interface 135 or to the external apparatus interface 130.

In addition, the processor 330 can control the demultiplexer 310, the image processor 320, and the like in the signal processing device 170.

Meanwhile, the audio processor 370 in the signal processing device 170 can perform the audio processing of the demultiplexed audio signal. To this end, the audio processor 370 can include various decoders.

In addition, the audio processor 370 in the signal processing device 170 can process a base, a treble, a volume control, and the like.

The data processor (not shown) in the signal processing device 170 can perform data processing of the demultiplexed data signal. For example, when the demultiplexed data signal is a coded data signal, it can be decoded. The encoded data signal can be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram can be integrated, added, or omitted according to a specification of the signal processing device 170 actually implemented.

In particular, the frame rate converter 350 and the formatter 360 can be provided separately in addition to the image processor 320.

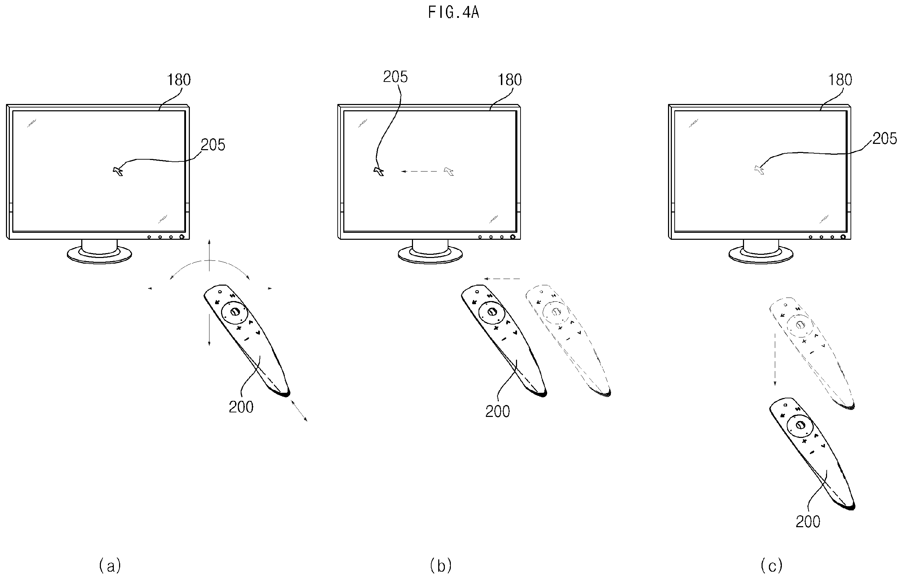

FIG. 4A is a diagram illustrating a control method of a remote controller of FIG. 2.

As shown in FIG. 4A(a), it is illustrated that a pointer 205 corresponding to the remote controller 200 is displayed on the display 180.

The user can move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 can be referred to as a space remote controller or a 3D pointing apparatus, because the pointer 205 is moved and displayed according to the movement in a 3D space, as shown in the figure.

FIG. 4A(b) illustrates that when the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus can calculate the coordinate of the pointer 205 from the information on the motion of the remote controller 200. The image display apparatus can display the pointer 205 to correspond to the calculated coordinate.

FIG. 4A(c) illustrates a case where the user moves the remote controller 200 away from the display 180, while pressing a specific button of the remote controller 200. Thus, a selection area within the display 180 corresponding to the pointer 205 can be zoomed in so that it can be displayed to be enlarged. Meanwhile, when the user moves the remote controller 200 close to the display 180, the selection area within the display 180 corresponding to the pointer 205 can be zoomed out so that it can be displayed to be reduced. Meanwhile, when the remote controller 200 moves away from the display 180, the selection area can be zoomed out, and when the remote controller 200 approaches the display 180, the selection area can be zoomed in.

Meanwhile, when the specific button of the remote controller 200 is pressed, it is possible to exclude the recognition of vertical and lateral movement. That is, when the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 can correspond to the moving speed or the moving direction of the remote controller 200.

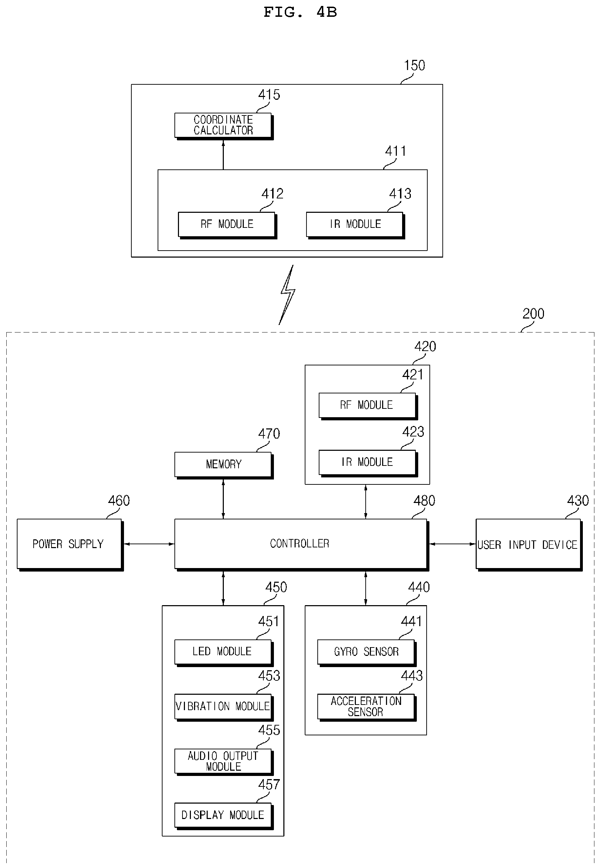

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 can include an RF module 421 for transmitting and receiving signals to and from the image display apparatus 100 according to a RF communication standard. In addition, the remote controller 200 can include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 can receive the signal transmitted by the image display apparatus 100 through the RF module 421. In addition, if necessary, the remote controller 200 can transmit a command related to power on/off, channel change, volume change, and the like to the image display apparatus 100 through the IR module 423.

The user input device 435 can be implemented by a keypad, a button, a touch pad, a touch screen, or the like. The user can operate the user input device 435 to input a command related to the image display apparatus 100 to the remote controller 200. When the user input device 435 includes a hard key button, the user can input a command related to the image display apparatus 100 to the remote controller 200 through a push operation of the hard key button. When the user input device 435 includes a touch screen, the user can touch a soft key of the touch screen to input the command related to the image display apparatus 100 to the remote controller 200. In addition, the user input device 435 can include various types of input means, such as a scroll key, a jog key, etc., which can be operated by the user, and the present disclosure does not limit the scope of the present disclosure.

The sensor device 440 can include a gyro sensor 441 or an acceleration sensor 443. The gyro sensor 441 can sense information regarding the motion of the remote controller 200.

For example, the gyro sensor 441 can sense information on the operation of the remote controller 200 based on the x, y, and z axes. The acceleration sensor 443 can sense information on the moving speed of the remote controller 200. Meanwhile, a distance measuring sensor can be further provided, and thus, the distance to the display 180 can be sensed.

The output device 450 can output an image or an audio signal corresponding to the operation of the user input device 435 or a signal transmitted from the image display apparatus 100. Through the output device 450, the user can recognize whether the user input device 435 is operated or whether the image display apparatus 100 is controlled.

For example, the output device 450 can include an LED module 451 that is turned on when the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. When the remote controller 200 is not moved for a certain time, the power supply 460 can stop the supply of power to reduce a power waste. The power supply 460 can resume power supply when a certain key provided in the remote controller 200 is operated.

The memory 470 can store various types of programs, application data, and the like necessary for the control or operation of the remote controller 200. If the remote controller 200 wirelessly transmits and receives a signal to/from the image display apparatus 100 through the RF module 421, the remote controller 200 and the image display apparatus 100 transmit and receive a signal through a certain frequency band. The controller 480 of the remote controller 200 can store information regarding a frequency band or the like for wirelessly transmitting and receiving a signal to/from the image display apparatus 100 paired with the remote controller 200 in the memory 470 and can refer to the stored information.

The controller 480 controls various matters related to the control of the remote controller 200. The controller 480 can transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that can wirelessly transmit and receive a signal to and from the remote controller 200 and a coordinate value calculator 415 that can calculate the coordinate value of a pointer corresponding to the operation of the remote controller 200.

The user input interface 150 can wirelessly transmit and receive a signal to and from the remote controller 200 through the RF module 412. In addition, the user input interface 150 can receive a signal transmitted by the remote controller 200 through the IR module 413 according to a IR communication standard.

The coordinate value calculator 415 can correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the controller 180 of the image display apparatus 100. The controller 180 can determine the information on the operation of the remote controller 200 and the key operation from the signal transmitted from the remote controller 200, and, correspondingly, control the image display apparatus 100.

For another example, the remote controller 200 can calculate the pointer coordinate value corresponding to the operation and output it to the user input interface 150 of the image display apparatus 100. In this case, the user input interface 150 of the image display apparatus 100 can transmit information on the received pointer coordinate value to the controller 180 without a separate correction process of hand shake or error.

For another example, unlike the figure, the coordinate value calculator 415 can be provided in the signal processing device 170, not in the user input interface 150.

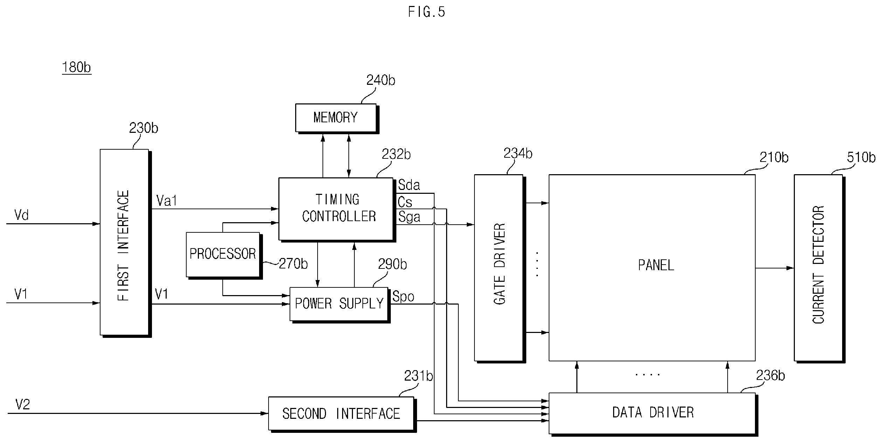

FIG. 5 is an exemplary internal block diagram of a display of FIG. 2.

Referring to FIG. 5, an organic light-emitting panel-based display 180b can include an organic light-emitting panel 210b, a first interface 230b, a second interface 231b, a timing controller 232b, a gate driver 234b, a data driver 236b, a memory 240b, a processor 270b, a power supply 290b, a current detector 510b, and the like.

The display 180b receives an image signal Vdb, a first DC voltage V1b, and a second DC voltage V2b, and can display a certain image based on the image signal Vdb.

Meanwhile, the first interface 230b in the display 180b can receive the image signal Vdb and the first DC voltage V1b from the signal processing device 170b.

Here, the first DC voltage V1b can be used for the operation of the power supply 290b and the timing controller 232b in the display 180b.

Next, the second interface 231b can receive a second DC voltage V2b from an external power supply 190b. Meanwhile, the second DC voltage V2b can be input to the data driver 236b in the display 180b.

The timing controller 232b can output a data driving signal Sdab and a gate driving signal Sgab, based on the image signal Vdb.

For example, when the first interface 230b converts the input image signal Vdb and outputs the converted image signal va1b, the timing controller 232b can output the data driving signal Sdab and the gate driving signal Sgab based on the converted image signal va1b.

The timing controller 232b can further receive a control signal, a vertical synchronization signal Vsyncb, and the like, in addition to the image signal Vdb from the signal processing device 170b.

In addition to the image signal Vdb, based on a control signal, a vertical synchronization signal Vsyncb, and the like, the timing controller 232b generates a gate driving signal Sgab for the operation of the gate driver 234b, and a data driving signal Sdab for the operation of the data driver 236b.

At this time, when the panel 210b includes a RGBW subpixel, the data driving signal Sdab can be a data driving signal for driving of RGBW subpixel.

Meanwhile, the timing controller 232b can further output a control signal Csb to the gate driver 234b.

The gate driver 234b and the data driver 236b supply a scan signal and an image signal to the organic light-emitting panel 210b through a gate line GLb and a data line DLb, respectively, according to the gate driving signal Sgab and the data driving signal Sdab from the timing controller 232b. Accordingly, the organic light-emitting panel 210b displays a certain image.

Meanwhile, the panel 210b can include an organic light emitting layer. In order to display an image, a plurality of gate lines GLb and data lines DLb can be disposed in a matrix form in each pixel corresponding to the organic light emitting layer.

Meanwhile, the data driver 236b can output a data signal to the organic light-emitting panel 210b based on a second DC voltage V2b from the second interface 231b.

The power supply 290b can supply various power supplies to the gate driver 234b, the data driver 236b, the timing controller 232b, and the like.

The current detector 510b can detect the current flowing in a sub-pixel of the panel 210b. The detected current can be input to the processor 270b or the like, for a cumulative current calculation.

The processor 270b can perform each type of control of the display 180b. For example, the processor 270b can control the gate driver 234b, the data driver 236b, the timing controller 232b, and the like.

Meanwhile, the processor 270b can receive current information flowing in a sub-pixel of the panel 210b from the current detector 510b.

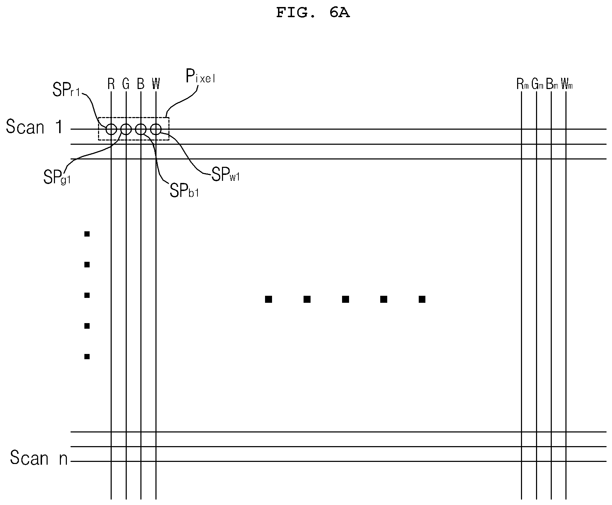

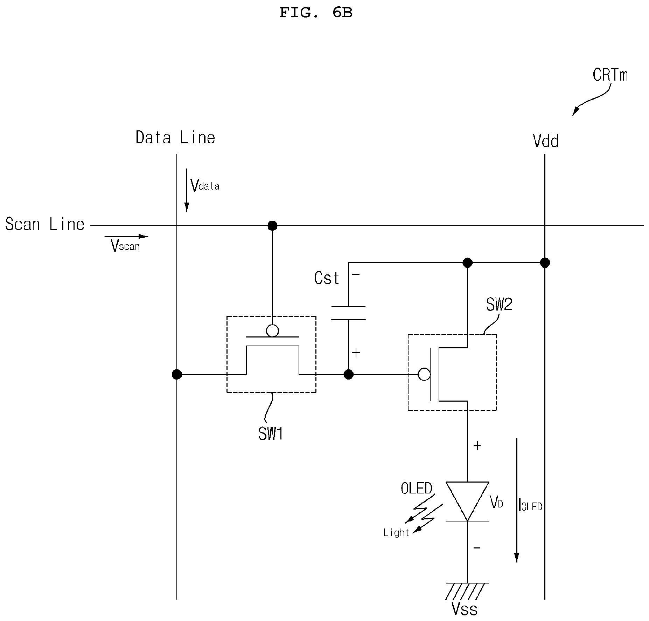

FIGS. 6A and 6B are diagrams referred to in the description of an organic light-emitting panel of FIG. 5.

First, FIG. 6A is a diagram illustrating a pixel in the organic light-emitting panel 210b.

Referring to the figure, the organic light-emitting panel 210b can include a plurality of scan lines Scan1 to Scann and a plurality of data lines R1, G1, B1, W1 to Rm, Gm, Bm, Wm intersecting the scan lines.

Meanwhile, a pixel (subpixel) is defined in an intersecting area of the scan line and the data line in the organic light-emitting panel 210b. In the figure, a pixel including sub-pixels SR1, SG1, SB1, and SW1 of RGBW is shown.

FIG. 6B illustrates a circuit of any one sub-pixel in the pixel of the organic light-emitting panel of FIG. 6A.

Referring to the figure, an organic light-emitting sub pixel circuit CRTm can include, as an active type, a scan switching element SW1, a storage capacitor Cst, a drive switching element SW2, and an organic light emitting layer OLED.

The scan switching element SW1 is turned on according to the input scan signal Vdscan, as a scan line is connected to a gate terminal. When it is turned on, the input data signal Vdata is transferred to the gate terminal of a drive switching element SW2 or one end of the storage capacitor Cst.

The storage capacitor Cst is formed between the gate terminal and the source terminal of the drive switching element SW2, and stores a certain difference between a data signal level transmitted to one end of the storage capacitor Cst and a DC voltage (VDD) level transmitted to the other terminal of the storage capacitor Cst.

For example, when the data signal has a different level according to a Plume Amplitude Modulation (PAM) method, the power level stored in the storage capacitor Cst varies according to the level difference of the data signal Vdata.

For another example, when the data signal has a different pulse width according to a pulse width modulation (PWM) method, the power level stored in the storage capacitor Cst varies according to the pulse width difference of the data signal Vdata.

The drive switching element SW2 is turned on according to the power level stored in the storage capacitor Cst. When the drive switching element SW2 is turned on, the driving current (IOLED), which is proportional to the stored power level, flows in the organic light emitting layer (OLED). Accordingly, the organic light emitting layer OLED performs a light emitting operation.

The organic light emitting layer OLED can include a light emitting layer (EML) of RGBW corresponding to a subpixel, and can include at least one of a hole injecting layer (HIL), a hole transporting layer (HTL), an electron transporting layer (ETL), and an electron injecting layer (EIL). In addition, it can include a hole blocking layer, and the like.

Meanwhile, the subpixels emit a white light in the organic light emitting layer OLED. However, in the case of green, red, and blue subpixels, a subpixel is provided with a separate color filter for color implementation. That is, in the case of green, red, and blue subpixels, each of the subpixels further includes green, red, and blue color filters. Meanwhile, since a white subpixel outputs a white light, a separate color filter is not required.

Meanwhile, in the figure, it is illustrated that a p-type MOSFET is used for a scan switching element SW1 and a drive switching element SW2, but an n-type MOSFET or other switching element, such as a JFET, IGBT, SIC, or the like are also available.

Meanwhile, the pixel is a hold-type element that continuously emits light in the organic light emitting layer (OLED), after a scan signal is applied, during a unit display period, specifically, during a unit frame.

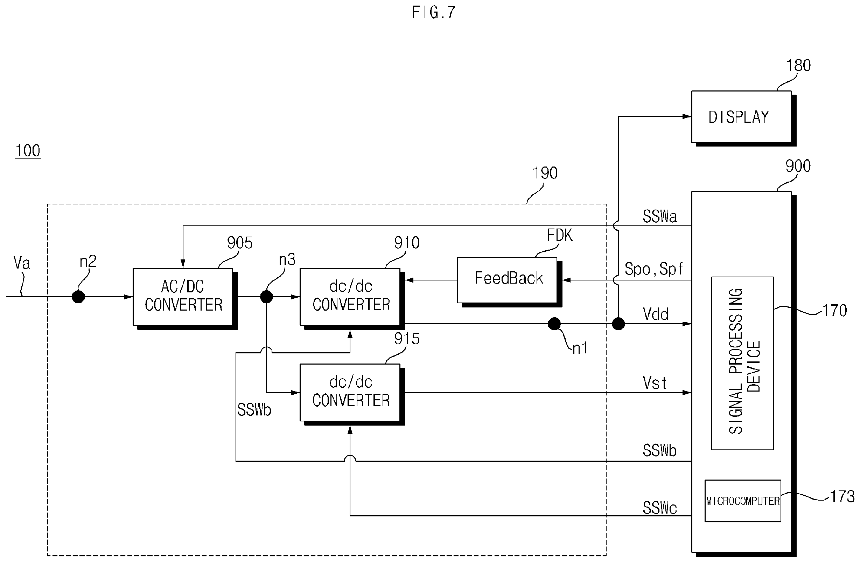

FIG. 7 is an exemplary internal block diagram of an image display apparatus according to an embodiment of the present disclosure.

Referring to the drawing, the image display apparatus 100 according to an embodiment of the present disclosure includes a display 180, a signal processing device 170 configured to output an image signal to the display 180, and a power supply 190 configured to supply a display driving voltage to the display 180.

The power supply 190 according to an embodiment of the present disclosure includes an AC/DC converter 905 configured to convert an input AC voltage Va into a DC voltage, and a DC/DC converter 910 configured to convert the level of the DC voltage from the AC/DC converter 905 and output a display driving voltage Vdd.

The figure illustrates that the AC/DC converter 905 is disposed between Node n2, which is an input terminal of the power supply 190, and an input node n3 of the third converter 910.

Meanwhile, an output node n1 of the AC/DC converter 905 can be electrically connected to the display 180.

The AC/DC converter 905 can include a diode or a switching element, and convert an input AC voltage Va into a DC voltage of a first level and output it.

The DC/DC converter 910 can convert an input DC voltage of the first level and output a display driving voltage VDD of a second level.

For example, the converter 910 can boost the DC voltage of the first level and output the display driving voltage Vdd of the second level higher than the first level.

On the one hand, if the display 180 is an organic light-emitting panel, the display driving voltage Vdd can be a pixel driving voltage for an organic light-emitting pixel.

On the other hand, if the display 180 is an inorganic light-emitting panel, the display driving voltage Vdd can be a pixel driving voltage for an inorganic light-emitting pixel.

On the other hand, if the display 180 is a liquid crystal panel, the display driving voltage Vdd can be a backlight driving voltage or a liquid crystal pixel driving voltage.

Meanwhile, the image display apparatus 100 according to an embodiment of the present disclosure further includes a main board 900 including a signal processing device 170 and a microcomputer (MICOM) 173.

The signal processing device 170 can output an image signal to the display 180.

Upon receiving a remote control signal, the microcomputer 173 can be operated to control the operation of the signal processing device 170 or the power supply 190.

The power supply 190 according to an embodiment of the present disclosure can output a microcomputer driving voltage Vst for the operation of the microcomputer 173.

To this end, the power supply 190 according to an embodiment of the present disclosure can further include a second DC/DC converter 915 for converting an input DC voltage of a first level to output a microcomputer driving voltage Vst of a third level.

At this time, the microcomputer driving voltage Vst can be lower than the display driving voltage Vdd.

Meanwhile, the mainboard 900 or the signal processing device 170 can output a display-on signal Spo or a display-off signal Spf to the power supply 190.

Accordingly, if the display 180 is on, the DC/DC converter 910 can be operated, and if the display 180 is off, the DC/DC converter 910 can stop operating.

On the one hand, the main board 900 or the signal processing device 170 can output a switch driving control signal SSwa to the AC/DC converter 905. Accordingly, the AC/DC converter 905 can be stably driven.

On the other hand, the mainboard 900 or the signal processing device 170 can output a switch driving control signal SSwb to the DC/DC converter 910. Accordingly, the DC/DC converter 910 can be stably driven.

On the other hand, the mainboard 900 or the signal processing device 170 can output a switch driving control signal SSwc to the second DC/DC converter 915. Accordingly, the second DC/DC converter 915 can be stably driven.

Meanwhile, the power supply 190 can further include a signal transmitter FDK connected between the converter 910 and the mainboard 900.

The signal transmitter FDK can receive a display-on signal Spo or a display-off signal Spf from the mainboard 900 including the signal processing device 170 or from the signal processing device 170, and transmit the display-on signal Spo or the display-off signal Spf to the converter 910.

FIG. 8 is an exemplary circuit diagram of a power supply according to an embodiment of the present disclosure.

Referring to the drawing, a power supply 190 according to an embodiment of the present disclosure includes a converter 910 configured to convert an input voltage and output a DC voltage. In this case, the converter 910 can be a DC/DC converter illustrated in FIG. 7.

The converter 910 according to an embodiment of the present disclosure includes: a transformer 805; a first switching element SW1 and a second switching element SW2 which are disposed at an input terminal of the transformer 805 and are connected in series to each other; a resonant capacitor Cr and a resonant inductor Lr which are disposed between and respectively connected to the input terminal of the transformer 805 and the second switching element SW2; and a switching controller 925 configured to control the first switching element SW1 and the second switching element SW2.

Meanwhile, if a current ir flowing through the resonant inductor Lr decreases while a switching frequency of the first switching element SW1 and the second switching element SW2 decreases, the switching controller 925 is configured to control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, the converter 910 according to the embodiment of the present disclosure can further include full-bridge diodes Da to Dd connected to the output terminal noa-nob of the transformer 805, and a capacitor Cd connected to both ends nda-ndb of the output terminal of the full-bridge diodes Da to Dd.

Meanwhile, the converter 910 according to the embodiment of the present disclosure can further include a resistor element Rd connected in parallel to the capacitor Cd.

Meanwhile, the converter 910 according to the embodiment of the present disclosure can further include a voltage detector A configured to detect a voltage Vr of the resonant capacitor Cr, and a current detector B configured to detect the current ir flowing in the resonant inductor Lr.

Meanwhile, the switching controller 925 can be configured to calculate a switching frequency based on the detected voltage Vr detected by the voltage detector A, and if the current detected by the current detector B decreases when the calculated switching frequency decreases, the switching controller 925 can be configured to control the first switching element SW1 and the second switching element SW2 to stop a switching operation. Accordingly, it is possible to reduce possibility of burnout of a circuit element.

Meanwhile, the switching controller 925 can be configured to calculate a switching frequency based on the detected voltage Vr detected by the voltage detector A, and if the current detected by the current detector B decreases when the calculated switching frequency decreases, the switching controller 925 can be configured to control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, the converter 910 can further include an output voltage detector E configured to detect an output voltage Vd of the converter 910.

Meanwhile, if the current ir flowing through the resonant inductor Lr decreases when the detected voltage Vd detected by the output voltage detector E increases, the switching controller 925 can be configured to control the first switching element SW1 and the second switching element SW2 to stop a switching operation. Accordingly, it is possible to reduce possibility of burnout of a circuit element. Particularly, the possibility of burnout of the resonant capacitor Cr can be reduced.

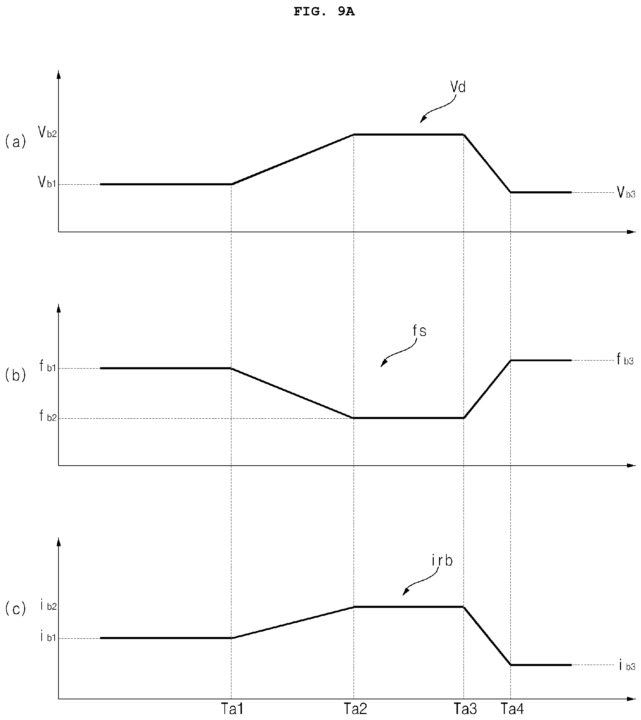

FIGS. 9A to 9D are diagrams referred to in the description of FIG. 8.

FIG. 9A is a diagram illustrating an example of a change in switching frequency and resonant current in response to a change in output voltage of a converter.

FIG. 9A can correspond to the case in which the switching frequency and the resonant current operate normally in response to the change in output voltage of the converter.

Referring to the drawing, an output voltage Vd of the converter 910 is maintained at a first display driving voltage Vb1, and then starts to increase at time Ta1 to reach a second display driving voltage Vb2 at time Ta2.

The output voltage Vd of the converter 910 is maintained at the second display driving voltage Vb2 during a period from time Ta2 to time Ta3, and then starts to decrease at time Ta3 to reach a third display driving voltage Vb3 at time Ta4.

Meanwhile, if the output voltage Vd of the converter 910 increases, the switching controller 925 can be configured to decrease a switching frequency fs of the first switching element SW1 and the second switching element SW2.

Meanwhile, if the output voltage Vd of the converter 910 decreases, the switching controller 925 can be configured to increase the switching frequency fs of the first switching element SW1 and the second switching element SW2.

That is, as illustrated herein, the switching frequency fs can be maintained at a first frequency fb1, and then starts to decrease at time Ta1 to reach a second frequency fb2 at time Ta2.

The switching frequency fs of the first switching element SW1 and the second switching element SW2 is maintained at the second frequency fb2 during a period from time Ta2 to time Ta3, and then starts to increase at time Ta3 to reach a third switching frequency fb3 at time Ta4.

Meanwhile, if the switching frequency fs of the first switching element SW1 and the second switching element SW2 decreases, the current ir flowing in the resonant inductor Lr increases.

Meanwhile, if the switching frequency fs of the first switching element SW1 and the second switching element SW2 increases, the current ir flowing in the resonant inductor Lr decreases.

That is, as illustrated herein, the current ir flowing in the resonant inductor Lr is maintained at a first current ib1, and then starts to increase at time Ta1 to reach a second current ib2 at time Ta2.

The current ir flowing in the resonant inductor Lr is maintained at the second current ib2 during a period from time Ta2 to time Ta3, and then starts to decrease at time Ta3 to reach a third current ib3 at time Ta4.

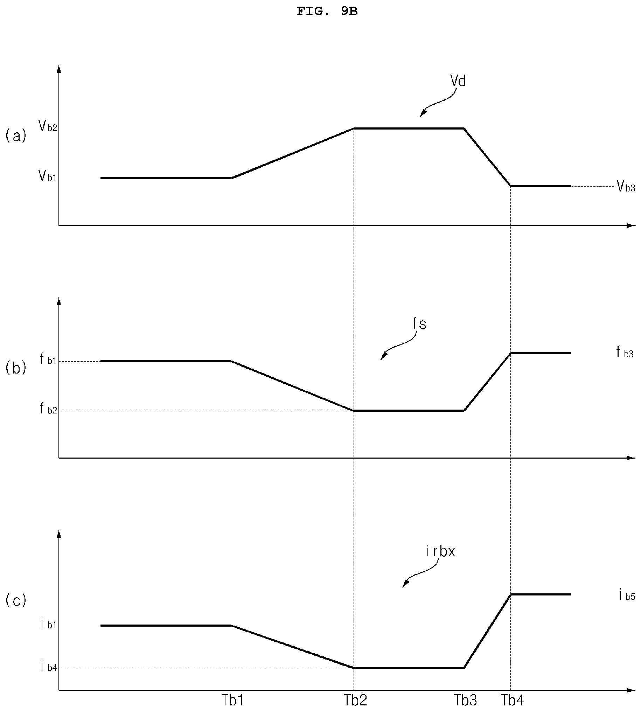

FIG. 9B is a diagram illustrating another example of a change in switching frequency and resonant current in response to a change in output voltage of a converter.

FIG. 9B can correspond to the case in which the switching frequency and the resonant current operate abnormally in response to a change in output voltage of the converter.

Referring to the drawing, an output voltage Vd of the converter 910 is maintained at a first display driving voltage Vb1, and then starts to increase at time Tb1 to reach a second display driving voltage Vb2 at time Tb2.

The output voltage Vd of the converter 910 is maintained at the second display driving voltage Vb2 during a period from time Tb2 to time Tb3, and then starts to decrease at time Tb3 to reach a third display driving voltage Vb3 at time Tb4.

Meanwhile, if the output voltage Vd of the converter 910 increases, the switching controller 925 can be configured to decrease a switching frequency fs of the first switching element SW1 and the second switching element SW2, and if the output voltage Vd of the converter 910 decreases, the switching controller 925 can be configured to increase the switching frequency fs of the first switching element SW1 and the second switching element SW2.

That is, as illustrated herein, the switching frequency fs can be maintained at a first frequency fb1, and then starts to decrease at time Tb1 to reach a second frequency fb2 at time Tb2.

The switching frequency fs of the first switching element SW1 and the second switching element SW2 is maintained at the second frequency fb2 during a period from time Tb2 to time Tb3, and then starts to increase at time Tb3 to reach a third switching frequency fb3 at time Tb4.

Meanwhile, if the switching frequency fs of the first switching element SW1 and the second switching element SW2 decreases, the current ir flowing through the resonant inductor Lr is supposed to increase, but it can decrease due to an abnormal operation, as illustrated herein.

Meanwhile, if the switching frequency fs of the first switching element SW1 and the second switching element SW2 increases, the current ir flowing through the resonant inductor Lr is supposed to decrease, but it can increase due to an abnormal operation, as illustrated herein.

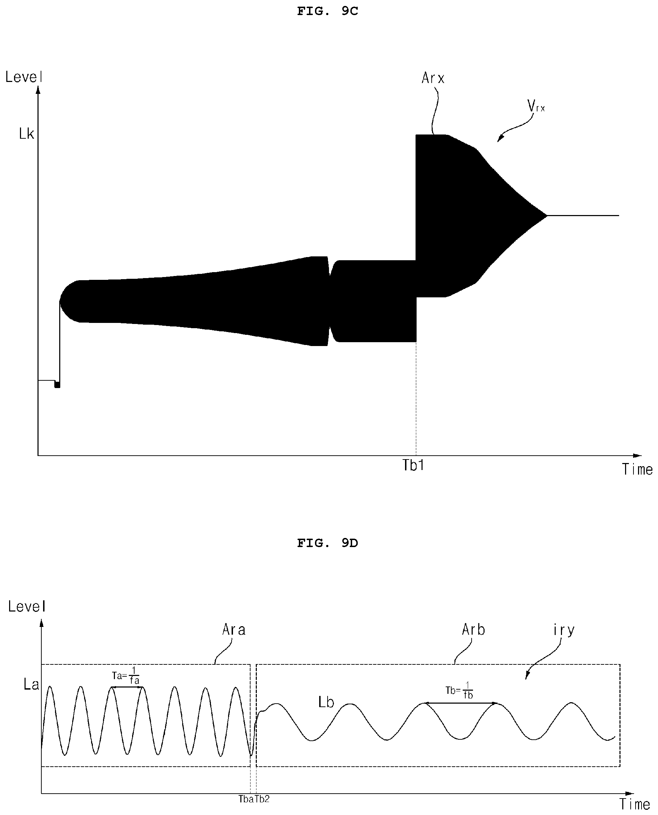

In FIG. 9B, (c) illustrates an example in which a current irbx flowing through the resonant inductor Lr is maintained at a first current ib1, and then starts to decrease at time Tb1 to reach a fourth current ib4 at time Tb2.

Meanwhile, (c) of FIG. 9B illustrates an example in which the current irbx flowing through the resonant inductor Lr is maintained at a second current ib1 during a period from time Tb2 to time Tb3, and then starts to increase at time Tb3 to reach a fifth current ib5 at time Tb4.

As illustrated in (c) of FIG. 9B, the current irbx flowing through the resonant inductor Lr is abnormal when an input voltage input to the converter 910 increases momentarily.

FIG. 9C illustrates an example in which an input voltage input to the converter 910 increases momentarily.

Referring to the drawing, the input voltage input to the converter 910 is a DC voltage and a portion of the voltage can pulsate.

As illustrated herein, the input voltage input to the converter 910 can pulsate stably until time Tb1, but increases momentarily after time Tb1 to reach a peak level Arx.

In this case, as illustrated in (c) of FIG. 9B, the current irbx flowing through the resonant inductor Lr is abnormal after time Tb1.

FIG. 9D is a diagram illustrating an example of a resonant current iry.

Referring to the drawing, until time Tba, a resonant current as a normal resonant current Ara has a peak level of La and a switching frequency of fa.

Meanwhile, after time Tb2 when the input voltage input to the converter 910 increases momentarily, a resonant current as an abnormal resonant current Arb has a peak level of Lb that is lower than La, and a switching frequency of fb that is lower than fa.

Meanwhile, as illustrated above with reference to FIGS. 9B to 9D, if the current ir flowing through the resonant inductor Lr decreases when the switching frequency of the first switching element SW1 and the second switching element SW2 decreases as the input voltage input to the converter 910 increases, the possibility of burnout of the resonant capacitor Cr disposed at a front end of the transformer 805 increases.

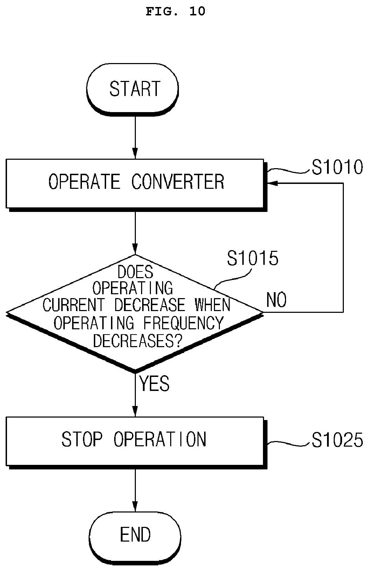

Accordingly, the present disclosure proposes a method of reducing the possibility of burnout of a circuit element, particularly the resonant capacitor Cr, in the converter 910, which will be described in further detail with reference to FIG. 10 and subsequent figures.

FIG. 10 is a flowchart illustrating a method of operating an image display apparatus according to an embodiment of the present disclosure.

Referring to FIG. 10, the power supply 190 according to an embodiment of the present disclosure operates the converter 910 (S1010).

For example, the switching controller 925 can control the switching frequency so that the first switching element SW1 and the second switching element SW2 can operate at the first frequency fb1.

Meanwhile, the switching controller 925 can vary the switching frequency depending on load fluctuations at the output terminal of the converter 910.

For example, the switching controller 925 can reduce the switching frequency when a load at the output terminal of the converter 910 increases.

In another example, the switching controller 925 can increase the switching frequency when the load at the output terminal of the converter 910 increases.

Then, the switching controller 925 can be configured to determine whether a resonant current decreases when the switching frequency decreases (S1015), and if so, configured to determine that operation is abnormal and stop a switching operation in order to protect a circuit element (S1025).

Accordingly, the converter 910 temporarily stops operating, thereby reducing the possibility of burnout of a circuit element, particularly the resonant capacitor Cr, in the converter 910.

Meanwhile, if the switching frequency of the first switching element SW1 and the second switching element SW2 decreases from the first frequency fb1 to the second frequency fb2, and a level of the current ir flowing through the resonant inductor Lr decreases from the first level ib1 to the second level ib4, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, if the current ir flowing through the resonant inductor Lr decreases when the output voltage Vd of the converter 910 increases, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, if the current ir flowing through the resonant inductor Lr decreases when the output voltage Vd of the converter 910 increases from the first display driving voltage Vb1 to the second driving voltage Vb1, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, the converter 910 can output the first display driving voltage Vb1 in a display power control-on mode, and output the second display driving voltage Vb2, higher than the first display driving voltage Vb1, in a display power control-off mode.

For example, if the display power control-on mode is selected in a settings screen, the signal processing device 170 can control the power supply 190 to supply the first display driving voltage Vb1 to the display 180, and if the display power control-off mode is selected in the settings screen, the signal processing device 170 can control the power supply 190 to supply the second display driving voltage Vb2 to the display 180. Accordingly, various display driving voltages can be output.

Meanwhile, if the current ir flowing through the resonant inductor Lr decreases when the display power control-on mode is switched to the display power control-off mode, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, if an image output mode is Eco mode or Standard mode, the converter 910 can output the first display driving voltage Vb1, and if an image output mode is Cinema mode or Game mode, the converter 910 can output the second display driving voltage Vb2 higher than the first display driving voltage Vb1.

Meanwhile, if the current ir flowing through the resonant inductor Lr decreases when the image output mode is switched from Eco mode or Standard mode to Cinema mode or Game mode, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

Meanwhile, if a black image is displayed on the display 180, the converter 910 can output the first display driving voltage Vb1, and if a white image is displayed on the display 180, the converter 910 can output the second display driving voltage Vb2 higher than the first display driving voltage Vb1.

Meanwhile, if the current ir flowing through the resonant inductor Lr decreases when the display 180 displays the black image and then the white image, the switching controller 925 can control the first switching element SW1 and the second switching element SW2 to stop a switching operation. Accordingly, it is possible to reduce possibility of burnout of a circuit element. Particularly, the possibility of burnout of the resonant capacitor Cr can be reduced.

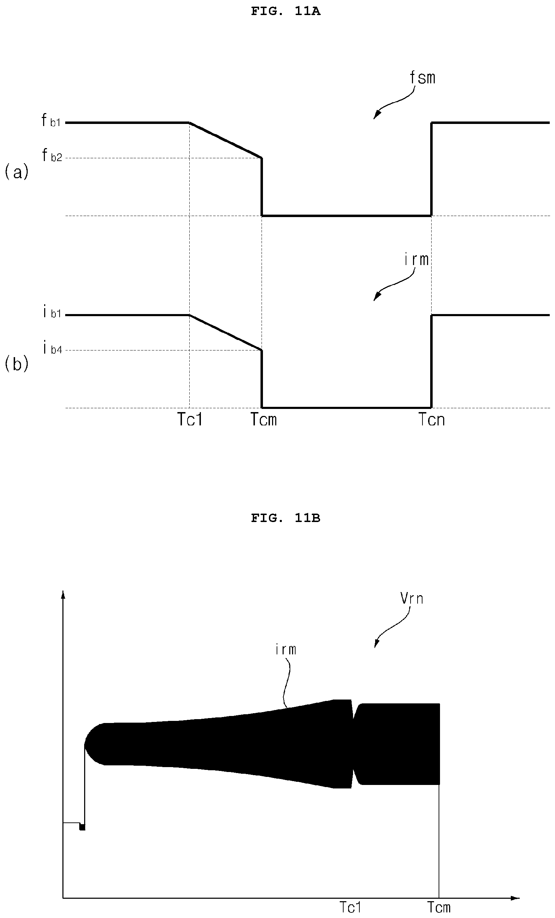

FIGS. 11A to 11C are diagram referred to in the description of FIG. 10.

First, FIG. 11A is a diagram illustrating a current irm flowing through the resonant inductor Lr that corresponds to a switching frequency fsm of the first switching element SW1 and the second switching element SW2.

Referring to the drawing, the switching controller 925 can control the switching frequency fsm to be maintained at a first switching frequency fb1 and then to decrease at time Tc1.

For example, if the output voltage Vd of the converter 910 is maintained at a first display driving voltage Vb1 and then increases at time Tc1, the switching controller 925 can control the switching frequency fsm to be maintained at a first switching frequency fb1 and then to decrease at time Tc1.

Meanwhile, if the current ir flowing through the resonant inductor Lr decreases when the switching frequency fsm of the first switching element SW1 and the second switching element SW2 decreases, the switching controller 925 can control the first switching element SW1 and the second switching element SW2 to stop a switching operation.

It is illustrated in the drawing that the current irm flowing through the resonant inductor Lr decreases from a first level ib1 to a second level ib4 when the switching frequency fsm starts to decrease at time Tc1.

If the current irm flowing through the resonant inductor Lr decreases from the first level ib1 to the second level ib4 when the switching frequency fsm starts to decrease at time Tc1, the switching controller 925 can control the first switching element SW1 and the second switching element SW2 to stop a switching operation immediately at time Tcm.

Accordingly, the first switching element SW1 and the second switching element SW2 stop the switching operation during a temporary period from Tcm to Tcn, such that the switching frequency can be zero.

In addition, the first switching element SW1 and the second switching element SW2 stop the switching operation during a temporary period from Tcm to Tcn, such that the current irm flowing through the resonant inductor Lr can be zero.

Accordingly, the possibility of burnout of a circuit element in the converter 910 can be reduced. Particularly, the possibility of burnout of the resonant capacitor Cr can be reduced.

FIG. 11B is a diagram illustrating an example of an input voltage Vrn of the converter 910.

Referring to the drawing, the input voltage of the converter 910 gradually increases until time Tc1 in FIG. 11A, and then is maintained approximately constant during a period between Tc1 and Tcm.

For example, if the current irm flowing through the resonant inductor Lr decreases from the first level ib1 to the second level ib4 when the switching frequency fsm decreases as the input voltage of the converter 910 is maintained approximately constant, the switching controller 925 can control the first switching element SW1 and the second switching element SW2 to stop a switching operation immediately at time Tcm.

In another example, if the current irm flowing through the resonant inductor Lr decreases from the first level ib1 to the second level ib4 when the switching frequency fsm decreases as the input voltage of the converter 910 increases momentarily after time Tb1 as illustrated in FIG. 9C, the switching controller 925 can control the first switching element SW1 and the second switching element SW2 to stop a switching operation immediately at time Tcm.

Accordingly, the possibility of burnout of a circuit element in the converter 910 can be reduced. Particularly, the possibility of burnout of the resonant capacitor Cr can be reduced.

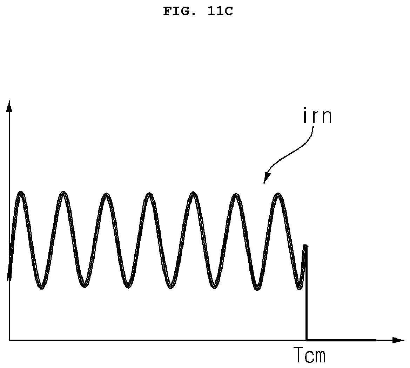

FIG. 11C is a diagram illustrating an example of a current irn flowing through the resonant inductor Lr.

Referring to the drawing, the current irn flows through the resonant inductor Lr until time Tcm, but the current irn flowing through the resonant inductor Lr becomes zero as the switching operation is stopped after time Tcm.

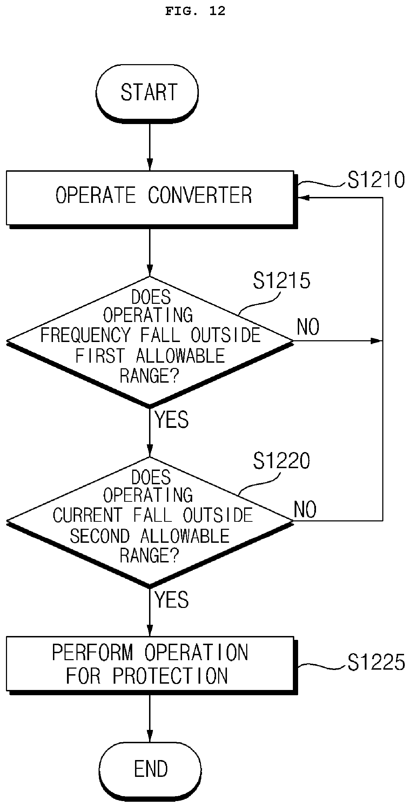

FIG. 12 is a flowchart illustrating a method of operating an image display apparatus according to another embodiment of the present disclosure.

Referring to the drawing, the power supply 190 according to an embodiment of the present disclosure operates the converter 910 (S1010).

Then, the switching controller 925 can determine whether a switching frequency of the first switching element SW1 and the switching element falls outside a first allowable range (S1215).

For example, if the switching frequency is changed even when there is no load fluctuation, the switching controller 925 can determine that the switching frequency falls outside the first allowable range.

In another example, if the output voltage Vd of the converter 910 increases from the first display driving voltage Vb1 to the second display driving voltage Vb2 due to a load fluctuation, the switching controller 925 can determine that the switching frequency falls outside the first allowable range.

Then, when the switching frequency falls outside the first allowable range, the switching controller 925 can determine whether the current ir flowing through the resonant inductor Lr falls outside a second allowable range (S1220), and if so, the switching controller 925 can control the first switching element SW1 and the second switching element SW2 to stop a switching operation (S1225).

For example, if the current ir flowing through the resonant inductor Lr decreases when the output voltage Vd of the converter 910 increases from the first display driving voltage Vb1 to the second display driving voltage Vb2, the switching controller 925 can determine that current ir flowing through the resonant inductor Lr falls outside the second allowable range.

In this case, the switching controller 25 can control the first switching element SW1 and the second switching element SW2 to stop a switching operation. Accordingly, the possibility of burnout of a circuit element in the converter 910 can be reduced. Particularly, the possibility of burnout of the resonant capacitor Cr can be reduced.

It will be apparent that, although the preferred embodiments have been illustrated and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. An image display apparatus comprising:
a display;
a signal processing device configured to output an image signal to the display; and
a power supply including a converter configured to supply a display driving voltage to the display,
wherein the converter comprises:
a transformer;
a first switching element and a second switching element disposed at an input terminal of the transformer and connected in series with each other;
a resonant capacitor and a resonant inductor disposed between and respectively connected to the input terminal of the transformer and the second switching element; and
a switching controller configured to control the first switching element and the second switching element,
wherein in response to a current flowing through the resonant inductor decreasing and a switching frequency of the first switching element and the second switching element decreasing, the switching controller is configured to stop a switching operation of the first switching element and the second switching element.

2. The image display apparatus of claim 1, wherein the converter further comprises:
a voltage detector configured to detect a voltage of the resonant capacitor; and
a current detector configured to detect a current flowing through the resonant inductor,
wherein the switching controller is configured to calculate a switching frequency based on a voltage detected by the voltage detector, and in response to the current detected by the current detector decreasing and the calculated switching frequency decreasing, configured to stop a switching operation of the first switching element and the second switching element.

3. The image display apparatus of claim 1, wherein in response to the switching frequency of the first switching element and the second switching element decreasing from a first frequency to a second frequency and a level of the current flowing through the resonant inductor decreasing from a first level to a second level, the switching controller is configured to stop a switching operation of the first switching element and the second switching element.

4. The image display apparatus of claim 1, wherein in response to the current flowing through the resonant inductor decreasing and an output voltage of the converter increasing, the switching controller is configured to stop a switching operation of the first switching element and the second switching element.

5. The image display apparatus of claim 4, wherein the converter further comprises an output voltage detector configured to detect an output voltage of the converter,
wherein in response to the current flowing through the resonant inductor decreasing and a voltage detected by the output voltage detector increasing, the switching controller is configured to stop a switching operation of the first switching element and the second switching element.

6. The image display apparatus of claim 1, wherein in response to the current flowing through the resonant inductor decreasing and the output voltage of the converter increasing from a first display driving voltage to a second display driving voltage, the switching controller is configured to stop a switching operation of the first switching element and the second switching element.

7. The image display apparatus of claim 6, wherein the signal processing device is configured to:
in response to a display power control-on mode being selected in a settings screen, control the power supply to supply the first display driving voltage to the display; and
in response to a display power control-off mode being selected in the settings screen, control the power supply to supply the second display driving voltage to the display.

8. The image display apparatus of claim 6, wherein in response to the current flowing through the resonant inductor decreasing and the display power control-on mode being switched to the display power control-off mode, the switching controller is configured to stop a switching operation of the first switching element and the second switching element.

9. The image display apparatus of claim 6, wherein in response to the current flowing through the resonant inductor decreasing and an image output mode being switched from Eco mode or Standard mode to Cinema mode or Game mode, the switching controller is configured to stop a switching operation of the first switching element and the second switching element.

10. The image display apparatus of claim 1, wherein in response to the current flowing through the resonant inductor falling outside a second allowable range and the switching frequency falling outside a first allowable range, the switching controller is configured to stop a switching operation of the first switching element and the second switching element.

11. The image display apparatus of claim 1, wherein in response to the current flowing through the resonant inductor decreasing, the switching frequency of the first switching element and the second switching element decreasing, and an input voltage input to the converter increasing, the switching controller is configured to stop a switching operation of the first switching element and the second switching element.

12. The image display apparatus of claim 1, wherein in response to the current flowing through the resonant inductor decreasing when a load at the output terminal of the converter increases, the switching controller is configured to stop a switching operation of the first switching element and the second switching element.

13. The image display apparatus of claim 1, wherein in response to the current flowing through the resonant inductor decreasing and the display displaying a black image and then a white image, the switching controller is configured to stop a switching operation of the first switching element and the second switching element.

14. An image display apparatus comprising:
a display;
a signal processing device configured to output an image signal to the display; and
a power supply including a converter configured to supply a display driving voltage to the display,
wherein the converter comprises:
a transformer;
a first switching element and a second switching element disposed at an input terminal of the transformer and connected in series with each other;
a resonant capacitor and a resonant inductor disposed between and respectively connected to the input terminal of the transformer and the second switching element; and
a switching controller configured to control the first switching element and the second switching element,
wherein in response to a current flowing through the resonant inductor decreasing and an output voltage of the converter increasing, the switching controller is configured to stop a switching operation of the first switching element and the second switching element.

15. The image display apparatus of claim 14, wherein the converter further comprises an output voltage detector configured to detect an output voltage of the converter,
wherein in response to the current flowing through the resonant inductor decreasing and a voltage detected by the output voltage detector increasing, the switching controller is configured to stop a switching operation of the first switching element and the second switching element.
